# EUROPÄISCHE PATENTSCHRIFT

(11) **EP 3 072 627 B1**
(45) Veröffentlichungstag und Bekanntmachung des Hinweises auf die Patenterteilung: **27.12.2017**
(21) Anmeldenummer: 16162149.5
(22) Anmeldetag: 24.03.2016
(51) Int. Cl.: B23K 26/00, B44C 1/22, B42D 25/29, B23K 26/359, B23K 101/20

(54) **VERFAHREN ZUR STRUKTURERZEUGUNG AN EINER ZU BEARBEITENDEN KONTUR EINES BAUTEILS DURCH LASERSTRAHLUNG**
METHOD OF CREATING A STRUCTURE INSIDE A CONTOUR ON A WORKPIECE USING LASER BEAM
PROCEDE DE GENERATION DE STRUCTURE A L'INTERIEUR D'UN CONTOUR D'UNE PIECE A L'AIDE D'UN FAISCEAU LASER

(30) Priorität: 25.03.2015 DE 102015104467
(43) Veröffentlichungstag der Anmeldung: 28.09.2016
(73) Patentinhaber: ACSYS Lasertechnik GmbH, 70806 Kornwestheim (DE)
(72) Erfinder: Heinritz, Silvio, 09514 Pockau-Lengefeld (DE); Kreisel, Christian, 09648 Mittweida (DE); Polster, Marcus, 71642 Ludwigsburg (DE); Kimmel, Gerhard, 70806 Kornwestheim (DE)
(74) Vertreter: Sperling, Thomas

(56) Entgegenhaltungen:
- EP-A1- 2 428 307
- DE-T2- 60 102 007
- JP-A- 2002 291 949
- JP-A- 2003 299 753
- US-A1- 2006 046 626

## Beschreibung

Die vorliegende Erfindung betrifft ein Verfahren zur Strukturerzeugung an Oberflächen (siehe Anspruch 1). Hauptanwendung ist dabei die Erzeugung einer rauen Oberfläche, bei der die Rauheit so gleichmäßig verteilt ist, dass das menschliche Auge keine Regelmäßigkeit mehr wahrnehmen kann.
Dies kann bei Spritzgusswerkzeugen ebenso der Fall sein wie bei Prägewerkzeugen oder auch Prägestempeln. Als Anwendung kommt sowohl die Herstellung der Werkzeuge und Stempel in Frage, wie deren Reparatur, Überarbeitung und deren so genanntes Refreshing.
Ein zusätzliches Anwendungsgebiet ist die Einarbeitung erkennbarer und gegebenenfalls auslesbarer Strukturen, die verschlüsselte Informationen, Logos und Identifikationsmerkmale, beispielsweise für einen Plagiatsschutz enthalten.
Aus dem Stand der Technik sind gezielte Bearbeitungen von Oberflächen durch Ätzen, Elektroerodieren oder Sandstrahlen bekannt. Diese Verfahren haben den Nachteil, dass zum Erzeugen von Mustern bestimmte Bereiche gezielt abgedeckt werden müssen.
Eine gezielte und weniger aufwändigere Oberflächenbearbeitung ist mittels Lasertechnik möglich. Dabei werden die gewünschten Strukturen und Linienschraffuren mit unterschiedlichen Fülldichten und Füllwinkeln durch einen Laser mit unterschiedlichen Pulsbreiten, -formen, -zeiten und unterschiedlichen Leistungen gefüllt. Bei einer Laserbearbeitung einer Oberfläche mit diesen Parametern ergibt sich immer eine optische, vom menschlichen Auge wahrnehmbare Regelmäßigkeit, die eine Struktur bildet. Oftmals besteht aber die Anforderung einer an sich rauen und strukturfreien Oberfläche, die gegebenenfalls um ein Logo beziehungsweise um ein Identifikationsmerkmal ergänzt werden kann.

Aus der DE 601 02 007 T2 (die als nächstliegender Stand der Technik angesehen wird) ist ein Verfahren zur Bearbeitung von Formmatrizen für Münzen oder Medaillen mit gehärteten Oberflächen bekannt, in denen ein Motiv abgebildet ist, das aus unterschiedlich dicht angeordneten Reihen von Vertiefungen gebildet ist. Die Vertiefungen sind dabei sowohl in Bezug auf ihren Durchmesser als auch auf ihre Tiefe gleichmäßig ausgebildet. Auch dies führt zu einer Oberflächenstruktur, die eine für den Betrachter erkennbare Regelmäßigkeit aufweist.
Die EP 2 428 307 A1 zeigt ein Verfahren zur Erzeugung von rauen Oberflächenstrukturen, wobei die zu bearbeitende Kontur mit Fülllinien ausgefüllt wird, die wiederum in einzelne Laserpunkte mit einem definierten Abstand zerlegt werden, wobei jeder Laserpunkt mit Hilfe einer Zufallsverteilung gegenüber der Fülllinie verschoben wird. Ziel ist es dabei, die nicht erwünschte Regelmäßigkeit der Oberflächenstruktur zu vermeiden.
JP 2003 299753 A offenbart ein Verfahren zur Erstellung von Markierungen mit einem Laser auf einer Schlagfläche eines Golfschlägers, wobei sich die Ausrichtung der Markierungen an der Geometrie des Schlägerkopfes orientiert. Weiterhin offenbart JP 2002 291949 A verschiedene Markierungen für Golfschläger, wobei sich die Markierungen an der Geomietrie des Golfschlägers orientieren.
US 2006/046626 A1 offenbart ein Polierkissen zum chemisch-mechanischen Polieren, wobei die Arbeitsfläche des Polierkissens Nuten aufweist, die mit einem Laser erstellt werden können. Gemäß einer Ausführungsvarainte kann das Polierkissen auf der Arbeitsfläche zufällig angeordnete Nuten aufweisen, wobei aus der Beschreibung nicht hervorgeht, wie die zufällige Anorndung der Nuten erreicht werden kann.
Der vorliegenden Erfindung liegt die Aufgabe zugrunde, diesen Stand der Technik weiterzuentwickeln, um die gezielte Beeinflussung der Eigenschaft der Oberflächen von Bauteilen und deren Erscheinungsbild noch variabler gestalten zu können.
Diese Aufgabe wird erfindungsgemäß mit einem Verfahren gemäß den Merkmalen des Patentanspruchs 1 gelöst, an den sich die abhängigen Patentansprüche 2 bis 11 anschließen.
Die mit dem Laserstrahl zu bearbeitende Kontur weist dabei zumindest eine Füllung und ein zusätzliches Füllelement auf. Ein Füllelement kann dabei sowohl als eine Füllung als auch als ein Muster oder ähnliches ausgebildet sein.
Eine Füllung kann sich dabei auf die gesamte Fläche der zu bearbeitenden Kontur oder nur auf eine Teilfläche erstrecken.
Die zumindest eine Füllung besteht zumindest teilweise aus Fülllinien, an denen entlang der Laserstrahl geführt wird, wobei in der Füllung zuerst eine Mehrzahl paralleler Hilfslinien generiert werden, entlang derer sich die Fülllinien im Wesentlichen erstrecken.
Diese Hilfslinien, die virtuell oder physisch generiert werden können, sind, gemäß der Erfindung, Linien, die parallel verlaufen und ein Raster innerhalb der Füllung bilden.
Die eigentliche Oberflächenbearbeitung erfolgt mittels der mit dem Laserstrahl erzeugten Fülllinien, die sich in ihrer Ausrichtung an den Hilfslinien orientieren aber nicht mit diesen identisch sein müssen. Diese Abweichungen von dem regelmäßigen Muster der Hilfslinien schafft die gewünschte, zufällig wirkende Oberflächenrauigkeit innerhalb der zu bearbeitenden Kontur.
In Weiterbildung der Erfindung ist eine Mehrzahl von Füllungen vorgesehen, wobei die Anzahl der Füllungen dabei nicht beschränkt ist. Ebenso wenig die Form und Größe der einzelnen Füllungen.
Mit Vorteil wird die zu bearbeitende Kontur mehrfach mit einer Füllung versehen, wobei die Füllungen unterschiedlich angeordnete Hilfslinien mit unterschiedlicher Steigung aufweisen. Die Füllungen können die zu bearbeitende Kontur einander ergänzend ausfüllen oder sich teilweise oder vollständig überlappen.
Die durch die verschiedenen Füllungen unterschiedlich angeordneten Hilfslinien in verschiedenen Bereichen der Kontur wirken einer optischen Regelmäßigkeit in der Oberflächenstruktur entgegen. Das Überlappen von Füllungen kann einfach oder mehrfach erfolgen, wobei einzelne Füllungen auch kongruent zueinander sein können.

Die parallelen Hilfslinien jeder Füllung verlaufen bei den zumindest zwei Füllungen der zu bearbeitenden Kontur unter unterschiedlichen Winkeln zu dem Koordinatensystem der zu bearbeitenden Kontur, d.h. die Hilfslinien weisen zu den Rändern der zu bearbeitenden Kontur und damit auch zu den Hilfslinien möglicher weiterer Füllungen einen Winkel auf und vermindern auf diese Weise den Eindruck einer Regelmäßigkeit in Bezug auf den optischen Eindruck der zu bearbeitenden Kontur als Ganzes.

Des Weiteren werden die Start- und Endpunkte der einzelnen Hilfslinien einer Füllung durch den Abstand zu der zu bearbeitenden Kontur und durch den Abstand zwischen den parallelen Hilfslinien definiert. Beides kann innerhalb einer Füllung variieren, das heißt alle Hilfslinien einer Füllung verlaufen zwar parallel aber sie können in ihrer Länge ebenso variieren wie in ihrer Lage zum Rand der zu bearbeitenden Kontur.

Weiter mit Vorteil werden die Fülllinien mit einer definierten oder variablen Länge im Wesentlichen auf den Hilfslinien platziert. Damit orientieren sich die Fülllinien an der Ausrichtung der parallelen Hilfslinien, können dabei aber von den Hilfslinien abweichende Längen aufweisen. Durch diese Anordnung verlaufen in einer Füllung auch die Fülllinien als die eigentliche Oberflächenbearbeitung weitgehend parallel aber gegebenenfalls mit variablen Längen. Unter variabler Länge ist auch zu verstehen, dass die Linien eine an sich definierte Länge mit einem zufällig erzeugten Linienlängenversatz aufweisen können.

Auch können im Rahmen der Erfindung mehrere Fülllinien im Bereich einer Hilfslinie angeordnet sein, wobei nicht nur die Länge der einzelnen Fülllinien, sondern auch der Abstand zwischen zwei Fülllinien, beispielsweise mittels einer Zufallslogik variieren kann.

Im Rahmen der Erfindung besteht auch die weitere Varianz, dass die ersten Startpunkte der Fülllinien nicht mit dem Startpunkt der Hilfslinien übereinstimmen müssen, sondern diesen gegenüber einen Versatz aufweisen können, wobei zur weiteren Erhöhung der Varianz dieser Versatz zwischen benachbarten Hilfslinien unterschiedlich und einer Zufallslogik folgend ausgebildet sein kann.

Weiterhin erfindungsgemäß variieren die Fülllinien dahingehend, dass sie einen zufälligen Versatz des Startpunktes in x- beziehungsweise y-Richtung und einen zufälligen Winkelversatz gegenüber den Hilfslinien aufweisen. X-und y-Richtung beschreiben dabei die Flächenausdehnung der zu bearbeitenden Kontur in einem kartesischen Koordinatensystem. Diese Streubreite bei den Startpunkten der einzelnen Linien führt mit den mit einem Zufallsalgorithmus erzeugten Winkelabweichungen gegenüber den parallel zueinander angeordneten Hilfslinien zu dem gewünscht uneinheitlichen Bild der bearbeiteten Oberfläche.

Weiter mit Vorteil kann das zusätzliche Füllelement auch als ein Strukturmerkmal ausgebildet sein, das mit einem definierten Punkt auf einer Hilfslinie einer Füllung platziert werden kann. Dabei kann das Strukturmerkmal in Weiterbildung der Erfindung um den definierten Punkt gedreht oder in gleicher Weise wie die Fülllinien gegenüber den Hilfslinien verschoben angeordnet werden. Mit dem Strukturmerkmal kann beispielsweise ein Logo als Schmuckelement oder als Identifikationsmittel in die zu bearbeitende Kontur eingebracht werden. Unter dem definierten Punkt eines Strukturmerkmals ist ein Fixpunkt zu verstehen, der die Position und Ausrichtung des Strukturmerkmals definiert.
In den Varianzmöglichkeiten bestehen für Strukturmerkmale die gleichen Möglichkeiten wie für die Fülllinien. Die Varianzen für den Startpunkt einer Fülllinie können ohne weiteres auf den definierten Punkt eines Strukturmerkmals übertragen werden, da diese funktionsgleich als Ausrichtungspunkt einerseits für die Fülllinie und andererseits für das Strukturmerkmal dienen.
Weiter erfindungsgemäß können die Strukturmerkmale als eigene Füllung auf der zu bearbeitenden Kontur aufgebracht werden. Damit kann beispielsweise zuerst die gewünschte Rauigkeit durch eine oder mehrere vorhergehende Füllungen erzeugt werden, bevor als weiteres Füllelement die Strukturmerkmale aufgebracht werden.
Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Dabei zeigt:
- Fig. 1:: eine schematische Darstellung einer zu bearbeitenden Oberflächenkontur,
- Fig. 2:: diese Oberflächenkontur mit schematisch dargestellten Füllungen,
- Fig. 3:: schematisch die Platzierung von Fülllinien und die verwendeten Parameter in der zu bearbeitenden Oberflächenkontur,
- Fig. 4:: die Platzierung der Fülllinien und die verwendeten Parameter gemäß der Erfindung,
- Fig. 5:: schematisch die Ausrichtung der Fülllinien in der zu bearbeitenden Oberflächenkontur,
- Fig. 6:: die Platzierung eines Logos und die verwendeten Parameter.

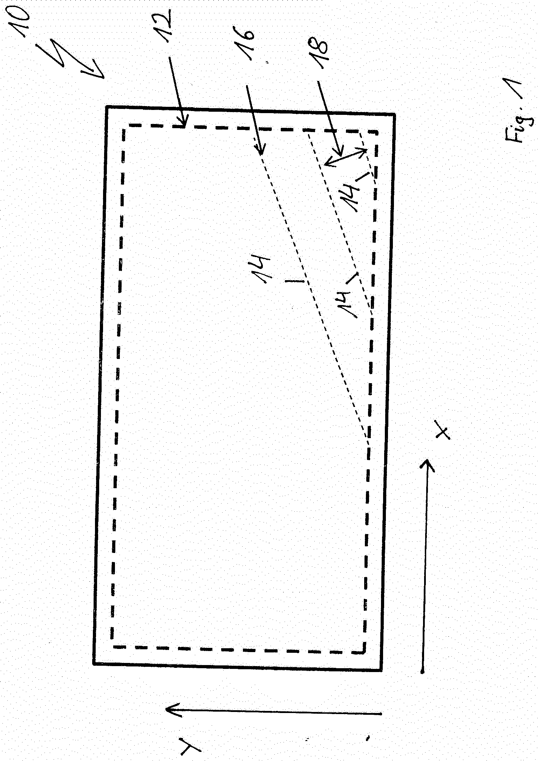

Die in Fig. 1 schematisch gezeigte Kontur 10 ist zur besseren Orientierung mit einem kartesischen Koordinatensystem in x-y-Richtung dargestellt und zeigt das Grundprinzip einer Füllung zum Erzeugen einer rauen Oberfläche, ohne dass diese für das menschliche Auge erkennbare Regelmäßigkeiten aufweist. Um diese unerwünschten Regelmäßigkeiten zu vermeiden, sind für die Oberflächenbearbeitung mit einem Laser möglichst viele Parameter der Bearbeitung außerhalb der Eigenschaften des Lasers vorgesehen, wobei diese Parameter nach dem Zufallsprinzip variiert werden können.
Der erste Parameter ist dabei der Abstand einer Füllung 12 zum Rand der Kontur 10. Die Begrenzung der Füllung ist dabei als gestrichelte Linie ausgebildet, wobei diese Linie eine Hilfslinie ist, die nicht auf das Material aufgebracht wird. Zur Erzeugung der in Fig. 1 nicht gezeigten Fülllinien werden in der Füllung 12 parallele Hilfslinien 14 generiert, wobei dies virtuell oder physisch erfolgen kann. Die parallelen Hilfslinien 14 haben als Parameter die innerhalb einer Füllung konstante aber bei einer Mehrzahl von Füllungen variierende Steigung 16 im x-y-System. Als zusätzlicher Parameter kommt der Abstand 18 zwischen den Hilfslinien der Füllung 12 hinzu, der bevorzugt innerhalb einer Füllung konstant ist.

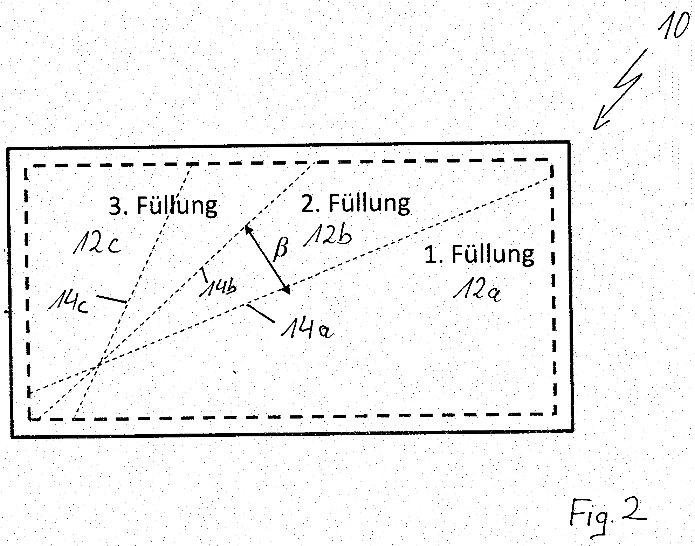

Auch Fig. 2 zeigt schematisch die zu bearbeitende Kontur 10. Als erfindungsgemäßer Parameter zur Erzeugung einer möglichst keine Regelmäßigkeiten aufweisenden Rauigkeit in der Oberfläche der zu bearbeitenden Kontur weist diese in diesem Ausführungsbeispiel drei Füllungen 12a, 12b, 12c auf, die jeweils deckungsgleich innerhalb der Kontur aufgebracht werden. Erfindungsgemäß sind dabei die Füllungen 12b und 12c als weitere Füllelemente zu sehen. Die Füllungen unterscheiden sich in der unterschiedlichen Steigung 16a, 16b, 16c der Hilfslinien der jeweiligen Füllungen 12a, 12b, 12c. Dabei ist für jede Füllung nur je eine Hilfslinie gezeigt. Die weiteren Hilfslinien innerhalb der jeweiligen Füllungen erstrecken sich dann parallel zu der beispielhaft gezeigten Hilfslinie, wobei der Abstand der einzelnen Hilfslinien innerhalb einer Füllung bevorzugt aber nicht notwendigerweise konstant ist.
Der variierende Parameter beim Vorsehen mehrerer Füllungen ist der Winkelversatz zwischen den Steigungen der Hilfslinien der einzelnen Füllungen. In Fig. 2 ist beispielhaft der Winkelversatz β zwischen den Steigungen 16b der Hilfslinien 14a und 14b der Fülllungen 12a und 12b dargestellt.

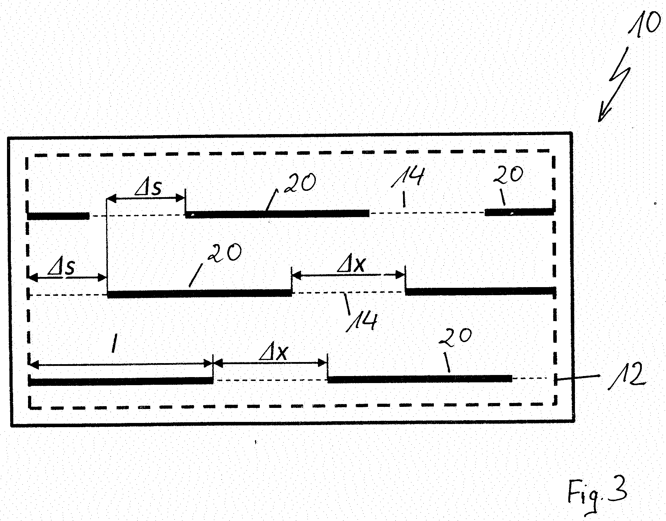

Fig. 3 zeigt die mittels des Laserstrahls auf den Hilfslinien 14 einer Füllung 12 in der zu bearbeitenden Kontur 10 aufgebrachten Fülllinien 20.
Auf den Hilfslinien 14 sind dabei mehrere Abschnitte mit Fülllinien 20 belegt. Anzahl und Länge I der Fülllinien können dabei als Parameter variieren, wobei eine Hilfslinie auch in voller Länge mit einer Fülllinie belegt sein kann (nicht gezeigt).
Zusätzliche Parameter zum Erzielen der gewünschten Optik können dabei der variable Abstand Δx zwischen den Startpunkten der einzelnen Fülllinien 20 auf einer Hilfslinie 14 sowie der Versatz Δs der Startpunkte der Fülllinien zwischen benachbarten Hilfslinien in der Füllung sein. Der Versatz Δs gilt auch in Bezug auf die Varianz der jeweiligen Startpunkte der Fülllinien gegenüber der Außenkontur der Füllung 12.
Im Ergebnis erhält man somit eine Anordnung von lasererzeugten Fülllinien, die sich in Länge und Abstand sowohl auf einer Hilfslinie als auch auf benachbarten Hilfslinien unterscheiden und deren Start- und Endpunkte nicht mit den Rändern der Füllung 12 innerhalb der zu bearbeitenden Kontur zusammenfallen müssen.

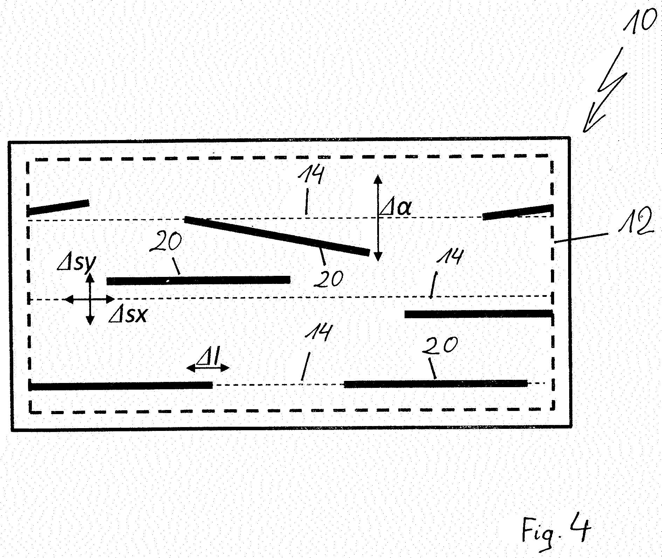

Fig. 4 zeigt eine Erweiterung der erfindungsgemäß möglichen Parameter, indem mittels einer Zufallslogik die Startpunkte der Fülllinien 20 variiert werden.

Für jede Fülllinie 20 wird ein zufälliger Startpunktversatz Δsx in x-Richtung sowie ein zufälliger Startpunktversatz Δsy in y-Richtung vorgegeben. Mit dem zufälligen Startpunktversatz Δsy in y-Richtung liegen die Fülllinien 20 nicht mehr zwingend auf den Hilfslinien 14.
Mit einem zufälligen Winkelversatz Δα der Fülllinien 20 gegenüber den Hilfslinien 14 ist auch die parallele Erstreckung der Fülllinien zu den Hilfslinien aufgehoben und die Varianz im Erscheinungsbild der Fülllinien entsprechend erhöht.
Die Variabilität der Länge I der Fülllinien 20 kann auch mit einer Zufallslogik und dem daraus resultierenden zufälligen Linienlängenversatz Δl erzielt werden.

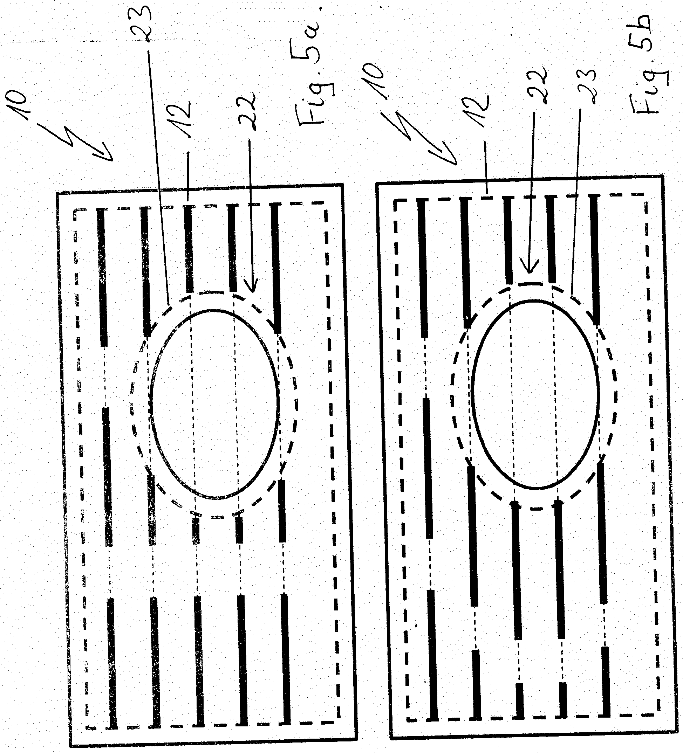

Fig. 5 zeigt die Möglichkeit, ein Füllelement als ein eine Innenkontur bildendes Strukturmerkmal 22 in die Füllung 12 der zu bearbeitenden Kontur 10 zu integrieren. Innenkonturen dienen beispielsweise der Erzeugung von Dekorstrukturen wie beispielsweise einer Bürstenstruktur oder einer Schliffstruktur wie dem sogenannten Frosting, oder auch zum Aufbringen von Sicherheits- oder Identifikationsmerkmalen, mit denen unter anderem ein Kopierschutz erzielt werden kann.
Wenn eine Schliffstruktur erzeugt werden soll, um beispielsweise die Reibung von Oberflächen oder deren Benetzbarkeit zu beeinflussen, womit der Aufwand an Schmiermitteln oder Energie reduziert werden kann, kann es von Bedeutung sein, die Startpunkte der Fülllinien 20 mit einer Rasterung zu versehen, die an der Innenkontur ausgerichtet ist (Fig. 5b). Auf diese Weise entsteht eine regelmäßige Struktur mit der die gewünschten Oberflächeneigenschaften hergestellt werden können. Die Rasterung kann dabei sowohl in x-Richtung als auch in y-Richtung bestehen, wobei letzteres zu einer äquidistanten Anordnung sowohl der Hilfs- als auch der Fülllinien führt.

Fig. 5a zeigt im Vergleich eine zu Fig. 5b analoge Ausbildung wobei die Startpunkte der Fülllinien eine Rasterung aufweisen, die an der Umrandung der eine Außenkontur bildenden Füllung 12 ausgerichtet ist.

Als Innenkontur ausgebildete Strukturmerkmale 22 bilden ein zusätzliches Füllelement und können auch an der Rasterung der Fülllinien, wie in Fig. 5a gezeigt, ausgerichtet werden.

Zur Begrenzung der jeweils Füllelemente darstellenden, eine Innenkontur bildenden Strukturmerkmale 22 sind Hilfslinien 23 generiert, die ebenfalls virtuell wie auch physisch erzeugt sein können.
Damit liegen die Innenkonturen innerhalb einer in Bezug auf die gewünschte Rauigkeit bearbeiteten Oberfläche 12. Dabei werden zuerst die Hilfslinien 14 und 23 und dann die Fülllinien 20 erzeugt, bevor als zusätzliches Füllelement die Innenkonturen bildenden Strukturmerkmale auf der fertiggestellten Oberfläche aufgebracht werden.

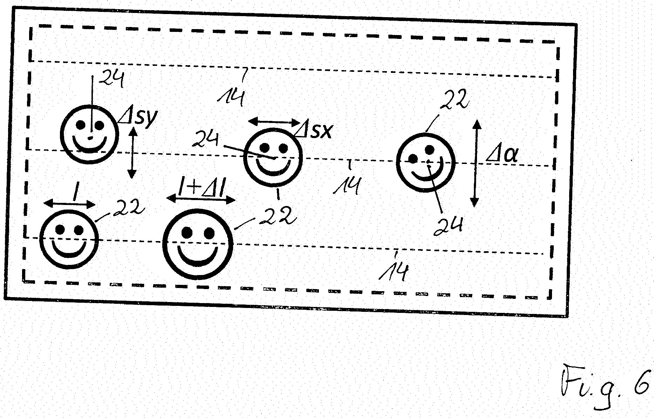

Fig. 6 zeigt die Optionen, wenn als zusätzliches Füllelement ein Logo als Strukturmerkmal 22 an Stelle von Fülllinien auf den Hilfslinien 14 in der Füllung 12 der zu bearbeitenden Kontur 10 aufgebracht wird. Diese insbesondere als Sicherheits- oder Identifikationsmerkmale dienenden Strukturmerkmale 22 können in ihrer Platzierung mit der gleichen Zufallslogik wie die in diesem Beispiel nicht verwendeten oder zumindest nicht gezeigten Fülllinien beaufschlagt werden.
Das als zusätzliches Füllelement dienende Strukturmerkmal ist mit einem definierten Ausrichtungspunkt 24 - hier dem Mittelpunkt des kreisförmigen Logos 22 - im Prinzip auf den Hilfslinien 14 platziert, kann aber ebenso wie die Fülllinien in den vorstehenden Ausführungsbeispielen einen zufälligen Versatz in dem x-y-Koordinatensystem (as, Δsy), einen zufälligen Längenversatz Δl, der hier zu einer Veränderung der Größe des Logos 22 führt, sowie einen zufälligen, zu einer Drehung des Logos 22 führenden Winkelversatz Δα aufweisen. Damit ist insbesondere die Aufbringung von Strukturmerkmalen mit einer Vorzugsorientierung und deren Rotation möglich.

Diese Zufallsvariablen bei der Anordnung des Logos 22 sind jeweils auf den definierten Ausrichtungspunkt 24 des Logos bezogen.

Mit der vorliegenden Erfindung ist es somit möglich, mit Hilfe der in den Ausführungsbeispielen gezeigten Fülllinien und Logos, die Struktur- und Oberflächeneigenschaften von Bauteilen sowie deren optisches Erscheinungsbild gezielt zu beeinflussen, was insbesondere die Erzielung einer bestimmten Rauigkeit umfasst, und darüber hinaus zusätzliche Informationen wie einen Kopierschutz oder andere, gegebenenfalls verschlüsselte bauteilspezifische Informationen mittels eines Lasers aufzubringen.

### LISTE DER BEZUGSZEICHEN

- 10: zu bearbeitende Kontur
- 12, 12a, 12b, 12c: Füllung
- 14: Hilfslinie innerhalb der Füllung
- 16, 16a, 16b, 16c: Steigung der Hilfslinien
- 18: Abstand zwischen den Hilfslinien
- 20: Fülllinien
- 22: Strukturmerkmal/Logo
- 23: Hilfslinien Strukturmerkmal/Logo
- 24: Ausrichtungspunkt Strukturmerkmal/Logo
- β: Winkelversatz zwischen den Hilfslinien
- l: Länge der Fülllinien
- Δx: Abstand der Startpunkte der Fülllinien auf einer Hilfslinie
- Δs: Versatz der Startpunkte der Fülllinien zwischen benachbarten Hilfslinien
- Δsx: zufälliger Versatz der Startpunkte der Fülllinien in x-Richtung
- Δsy: zufälliger Versatz der Startpunkte der Fülllinien in y-Richtung
- Δα: zufälliger Winkelversatz der Fülllinien gegenüber den Hilfslinien
- Δl: zufälliger Längenversatz der Fülllinien

## Patentansprüche

1. Verfahren zur Strukturerzeugung an einer zu bearbeitenden Kontur (10) eines Bauteils mittels Behandlung durch einen Laserstrahl,
**dadurch gekennzeichnet, dass**
- die zu bearbeitende Kontur (10) zumindest eine Füllung (12) und ein zusätzliches Füllelement aufweist,
- wobei die Füllung (12) zumindest teilweise aus Fülllinien (20) besteht,
- wobei die Fülllinien und das zusätzliche Füllelement durch den Laserstrahl erzeugt werden, wobei in die zumindest eine Füllung (12) eine Mehrzahl paralleler Hilfslinien (14) gebildet wird, entlang deren sich die Fülllinien (20) dieser Füllung (12) im Wesentlichen erstrecken, wobei die Hilfslinien (14), die virtuell oder physisch generiert werden können, Linien sind, die ein Raster innerhalb der Füllung (12) bilden,
die Fülllinien (20) einen zufälligen Startpunktversatz in x- beziehungsweise y-Richtung (Δsx , Δsy) sowie einen zufälligen Winkelversatz (Δα) gegenüber den Hilfslinien (14) aufweisen.

2. Verfahren nach Anspruch 1,
**dadurch gekennzeichnet, dass**
das zusätzliche Füllelement durch zumindest eine weitere Füllung (12) gebildet wird, die eine Mehrzahl paralleler Hilfslinien (14) aufweist, entlang deren sich die Fülllinien (20) dieser Füllung (12) im Wesentlichen erstrecken.

3. Verfahren nach Anspruch 1 oder 2,
**dadurch gekennzeichnet, dass**
die zu bearbeitende Kontur (10) mehrfach mit einer Füllung (12a-c) versehen wird.

4. Verfahren nach Anspruch 2 oder 3,
**dadurch gekennzeichnet, dass**
bei den zumindest zwei Füllungen (12) der zu bearbeitenden Kontur (10) die jeweils parallelen Hilfslinien (14) unter einem unterschiedlichen Winkel β zu dem Koordinatensystem (x-y) der zu bearbeitenden Kontur (10) verlaufen.

5. Verfahren nach einem der Ansprüche 1 bis 4,
**dadurch gekennzeichnet, dass**
die Start- und Endpunkte der Hilfslinien (14) durch den variablen Abstand zu der bearbeitenden Kontur (10) und den variablen Abstand (18) der parallelen Hilfslinien (14) zueinander definiert werden.

6. Verfahren nach einem der Ansprüche 1 bis 5,
**dadurch gekennzeichnet, dass**
die Fülllinien (20) einer definierten oder einer variablen Länge I auf den Hilfslinien (14) platziert werden können.

7. Verfahren nach einem der Ansprüche 1 bis 6,
**dadurch gekennzeichnet, dass**
der Abstand Δx zwischen den Fülllinien (20) auf einer Hilfslinie (14) variabel ist.

8. Verfahren nach einem der Ansprüche 1 bis 7,
**dadurch gekennzeichnet, dass**
die Startpunkte der Fülllinien (20) benachbarter Hilfslinien (14) einer Füllung (12) einen zufälligen Versatz Δs aufweisen.

9. Verfahren nach einem der Ansprüche 1 bis 8,
**dadurch gekennzeichnet, dass**
als zusätzliches Füllelement ein Strukturmerkmal (22) mit einem definierten Ausrichtungspunkt (24) auf einer Hilfslinie (14) einer Füllung (12) oder eine Innenkontur platziert wird.

10. Verfahren nach Anspruch 9,
**dadurch gekennzeichnet, dass**
das Strukturmerkmal (22) um den definierten Ausrichtungspunkt (24) gedreht oder in gleicher Weise wie die Fülllinien verschoben angeordnet werden kann.

11. Verfahren nach Anspruch 9, **dadurch gekennzeichnet, dass**
die Strukturmerkmale (22) im Rahmen einer eigenen Füllung (12) aufgebracht werden.

## Claims

1. Process for producing a structure on a to-be-processed contour (10) of a part via the application of a laser beam,
**characterised in that**
- the contour (10) subject to processing has at least one filling (12) and an additional fill element,
- whereby the filling (12) is at least in part composed of filling lines (20),
- whereby the filling lines and the additional fill element are created by the laser beam,
whereby
a plurality of parallel guides (14) is arranged in the at least one filling (12), along which the fill lines (20) of such filling (12) primarily extend, whereby the guides (14), that may be generated virtually or physically, are lines that form a pattern within the filling (12), the fill lines (20) have an additional starting point offset in x and/or y direction (sx, sy) as well as an additional angle offset (a) opposite the guides (14).

2. Process in accordance with claim 1,
**characterised in that**
the additional fill element is formed of at least one additional filling (12) that has a plurality of parallel guides (14) along which the fill lines (20) of this filling (12) primarily extend.

3. Process in accordance with claim 1 or 2,
**characterised in that**
the to-be-processed contour (10) is fitted with multiple fillings (12a-c).

4. Process in accordance with claim 2 or 3,
**characterised in that**
in the case of the at least two fillings (12) of the to-be-processed contour (10) each of the parallel guides (14) extend to the to-be-processed contour (10) in an angle β that differs from that of the coordinate system (x-y).

5. Process in accordance with one of claims 1 to 4,
**characterised in that**
that start and end points of the guides (14) are defined via variable gap to the to-be-processed contour (10) and the variable gap (18) of the parallel guides (14) to each other.

6. Process in accordance with one of claims 1 to 5,
**characterised in that**
the fill lines (20) of a defined or variable length 1 may be placed on the guides (14).

7. Process in accordance with one of claims 1 to 6,
**characterised in that**
the gap x between the fill lines (20) is variable on a guide (14).

8. Process in accordance with one of claims 1 to 7,
**characterised in that**
the start points of the guides (14) adjacent to the fill lines (20) of a filling (12) have an additional offset Δs.

9. Process in accordance with one of claims 1 to 8,
**characterised in that**
as an additional fill element, a structural feature (22) with a defined alignment point (24) is placed on a guide (14) of a filling (12) or an inner contour.

10. Process in accordance with claim 9,
**characterised in that**
the structural feature (22) may be rotated around the defined alignment point (24) or may be aligned in the same manner as the fill lines.

11. Process in accordance with claim 9,
**characterised in that**
the structural feature (22) is applied within the scope of its own filling (12).

## Revendications

1. Procédé de formation d'une structure sur un contour (10) à façonner d'un composant, à l'aide d'un traitement par rayon laser,
**caractérisé en ce que**
- le contour (10) à façonner comprend au moins un remplissage (12) et un élément de remplissage supplémentaire,
- le remplissage (12) se compose, au moins en partie, de lignes de remplissage (20),
- les lignes de remplissage et l'élément de remplissage supplémentaire sont produits à l'aide du rayon laser,
et
le remplissage (12) est constitué de plusieurs lignes guides (14) parallèles, le long desquelles s'étendent principalement les lignes de remplissage (20) de ce remplissage (12), les lignes guides (14), qui peuvent être générées virtuellement ou physiquement, sont des lignes qui forment une trame à l'intérieur du remplissage (12),
les lignes de remplissage (20) présentent un décalage aléatoire du point de départ dans le sens des abscisses ou des ordonnées (sx , sy), ainsi qu'un décalage angulaire (a) aléatoire par rapport aux lignes guides (14).

2. Procédé selon la revendication 1
**caractérisé en ce que**
l'élément de remplissage supplémentaire est formé d'au moins un autre remplissage (12), contenant plusieurs lignes guides (14) parallèles, le long desquelles les lignes de remplissages (20) de ce remplissage (12) s'étendent principalement.

3. Procédé selon l'une quelconque des revendications 1 ou 2,
**caractérisé en ce que**
le contour (10) à façonner est garni à plusieurs reprises d'un remplissage (12a-c).

4. Procédé selon l'une quelconque des revendications 2 ou 3,
**caractérisé en ce que**
dans les au moins deux remplissages (12) du contour (10) à façonner, les lignes guides (14) parallèles respectives suivent un angle β différent par rapport au système de coordonnées (x-y) du contour (10) à façonner.

5. Procédé selon l'une quelconque des revendications 1 à 4,
**caractérisé en ce que**
les points de départ et de fin des lignes guides (14) sont définis par l'écart variable avec le contour (10) à façonner et l'écart variable (18) entre les lignes guides (14) parallèles.

6. Procédé selon l'une quelconque des revendications 1 à 5,
**caractérisé en ce que**
les lignes de remplissage (20) peuvent être placées sur les lignes guides (14) selon une longueur 1 définie ou variable.

7. Procédé selon l'une quelconque des revendications 1 à 6,
**caractérisé en ce que**
l'écart x entre les lignes de remplissage (20) sur une ligne guide (14) est variable.

8. Procédé selon l'une quelconque des revendications 1 à 7,
**caractérisé en ce que**
les points de départ des lignes guides (14) adjacentes aux lignes de remplissage (20) d'un remplissage (12) comprennent un décalage aléatoire Δs.

9. Procédé selon l'une quelconque des revendications 1 à 8,
**caractérisé en ce que**
un élément structurel (22) avec un point d'alignement (24) défini est placé sur une ligne guide (14) d'un remplissage (12) ou d'un contour interne, en tant qu'élément de remplissage supplémentaire.

10. Procédé selon la revendication 9
**caractérisé en ce que**
l'élément structurel (22) tourne autour du point d'alignement (24) défini ou, de même que les lignes de remplissage, il peut être disposé en décalé.

11. Procédé selon la revendication 9
**caractérisé en ce que**
les éléments structurels (22) sont appliqués dans le cadre d'un remplissage (12) propre.
